# EUROPEAN PATENT SPECIFICATION

(11) **EP 2 955 731 B1**
(45) Date of publication and mention of the grant of the patent: **14.08.2019**
(21) Application number: 14748535.3
(22) Date of filing: 03.02.2014
(51) Int. Cl.: H01F 41/02, B22F 3/00, B22F 3/02, B22F 3/10, H01F 1/055, H01F 1/057, H01F 1/08, H01F 13/00

(54) **SINTERED MAGNET PRODUCTION DEVICE AND SINTERED MAGNET PRODUCTION METHOD**
VORRICHTUNG ZUR HERSTELLUNG EINES SINTERMAGNETEN UND VERFAHREN ZUR HERSTELLUNG EINES SINTERMAGNETEN
DISPOSITIF DE PRODUCTION D'AIMANT FRITTÉ ET PROCÉDÉ DE PRODUCTION D'AIMANT FRITTÉ

(30) Priority: 05.02.2013 JP 2013020342
(43) Date of publication of application: 16.12.2015
(73) Proprietor: INTERMETALLICS CO., LTD., 1642-144, Nasubigawa, Nakatsugawa-shi, Gifu 509-9132 (JP); Daido Steel Co.,Ltd., Nagoya-shi Aichi 461-8581 (JP)
(72) Inventor: SAGAWA, Masato, Kyoto-shi, Kyoto 615-8245 (JP); MIZOGUCHI, Tetsuhiko, Kyoto-shi, Kyoto 615-8245 (JP); YOSHIKAWA, Norio, Nagoya-shi, Aichi 457-8545 (JP)
(74) Representative: Hoeger, Stellrecht & Partner Patentanwälte mbB
(86) International application number: PCT/JP2014/052412
(87) International publication number: WO 2014/123078

(56) References cited:
- EP-A1- 2 472 535
- WO-A1-2011/024936
- JP-A- 2008 263 242
- JP-A- 2009 016 849
- JP-A- 2010 272 746
- JP-B2- 3 568 651

## Description

### TECHNICAL FIELD

The present invention relates to a system and method for producing a sintered magnet containing a rare-earth element R, such as an RFeB system (R₂Fe₁₄B) or RCo system (RCo₅, R₂Co₁₇).

### BACKGROUND ART

For the production of sintered magnets, a method has been conventionally used which includes the steps of filling a cavity of a container with fine powder of a starting alloy (which is hereinafter called the "alloy powder") (filling process), applying a magnetic field to the alloy powder in the cavity to orient the particles of the alloy powder (orienting process), subsequently applying pressure to the alloy powder to produce a compression-molded compact (compression-molding process), and heating the compression-molded compact to sinter it (sintering process). A variation of this method has also been used in which, after the cavity has been filled with the alloy powder, the orienting process and the compression-molding process are simultaneously performed by applying a magnetic field to the alloy powder while applying pressure by a pressing machine. In any cases, these methods uses a pressing machine for compression molding. Therefore, in the present application, these methods are called the "pressing method."

Meanwhile, in recent years, it has been found that a sintered magnet having a desired shape using corresponding shape of cavity can be obtained, without the compression-molding process, by a method in which the alloy powder that has been placed in the cavity is oriented in a magnetic field and subsequently, directly subjected to the sintering process (Patent Literature 1). In the present application, such a method of producing a sintered magnet without the compression-molding process is called the "press-less method."

In the pressing method, the orienting process also requires an application of a mechanical pressure; otherwise, when the compression-molding process is performed after the orienting process, the alloy-powder particles which have been methodically oriented in the orienting process would be disordered by the compression-molding. Therefore, a strong magnetic field must be used for the orientation, and it is difficult to contain the entire system (including the pressing machine) within the magnetic field. By contrast, the press-less method is advantageous in that it does not include application of such pressure and therefore does not require using an expensive magnetic field pressing machine; the application of the magnetic field can be performed within an air-core coil formed by a conductive wire wound around the cavity filled with the alloy powder.

### CITATION LIST

### PATENT LITERATURE

Patent Literature 1: JP 2006-019521 A
Patent Literature 2: JP 11-049101 A
Patent Literature 3: JP 2008-263242 A describes a method and an apparatus for manufacturing a magnetically anisotropic rare earth sintered magnet.
Patent Literature 4: EP 2 472 535 A1 discloses a NdFeB sintered magnet production method and production device as well as a NdFeB sintered magnet produced thereby.
Patent Literature 5: JP 2009-016849 A discloses a method for manufacturing a magnetically anisotropic rare earth sintered magnet that involves no orientation disturbance causing coercive force deterioration and does not scatter fine powders to be used as materials.
Patent Literature 6: JP 3568651 B2 describes a method of manufacture of an anisotropic sintered magnet with uniform high magnetic flux density, suppressing the disarrangement of the orientation of the magnet.

### SUMMARY OF INVENTION

### TECHNICAL PROBLEM

Whichever of the pressing method and the press-less method is used, the product obtained by sintering the powder is slightly smaller in size than the powder before the sintering (the compression-molded compact or the lump of powder in the cavity). Accordingly, the press die or the cavity shape is designed to be slightly larger than the intended shape of the sintered product.

However, the present inventors have discovered that a sintered magnet obtained by the press-less method may not take the intended shape (the shape corresponding to the cavity) due to a variation in the degree of shrinkage or deformation depending on the position within the air-core coil (this phenomenon is hereinafter called the "distortion").

The problem to be solved by the present invention is to provide a sintered magnet production system and method using a press-less method capable of minimizing the distortion of the sintered magnet.

### SOLUTION TO PROBLEM

The present inventors have studied the manufacturing conditions for the cases where the distortion of the sintered magnets occurred, and have found that significant amounts of distortion occurred in the sintered magnets obtained from the cavities placed near the open ends of the air-core coil in the magnetic orientation process of the alloy powder. For example, in the case where a cavity having a shape corresponding to a plate-shaped rectangular sintered magnet is placed within an air-core coil with the plate face perpendicular to and off the axis of the air-core coil (coil axis), the eventually obtained sintered magnet will not have a rectangular plate face; the plate face is distorted to an arc shape with the center at the side of the coil axis. A similar distortion was observed in a sintered magnet obtained from a cavity placed near the longitudinal center of the coil axis, although it was less noticeable than in the case of the cavities near the ends (open ends).

From these facts, the present inventors have inferred the cause of the distortion as follows: The magnetic field lines within the air-core coil form a "trumpet-like" shape which spreads in the radial direction from the coil axis as the position departs from the center of the air-core coil toward the open ends. If a cavity filled with alloy powder is placed in a magnetic field with such magnetic field lines in the orienting process, the direction of the magnetic field lines, or the direction of the magnetic field, deviates depending on the position within the cavity (relative to the coil axis). Consequently, the direction of the magnetic orientation of the alloy-powder particles varies depending on the position within the cavity. In general, the shrinkage factor is large in the direction of the magnetic orientation. Therefore, if the alloy powder under such a condition is sintered by a heating process, the obtained sintered magnet will have a different shrinkage factor in each portion. Such a variation in the direction of the magnetic field depending on the position within the cavity, and the thereby caused variation in the direction of the magnetic orientation as well as the difference in the shrinkage factor are not noticeable in the central region of the air-core coil, but noticeable at cavities placed near the open ends.

Accordingly, the present inventors have studied the configuration of the air-core coil for making the magnetic field lines within the core of the air-core coil fully aligned to the direction parallel to the coil axis, and have developed the present invention.

That is to say, the sintered magnet production system according to the present invention developed for solving the previously described problem is a system including: a filling device for filling a cavity of a container with alloy powder of a material for a sintered magnet; an orienting device for orienting the alloy powder held in the cavity by applying a magnetic field, the orienting device not having a means for applying a mechanical pressure to the alloy powder; and a sintering device for sintering the alloy powder oriented by the orienting device, by heating the alloy powder without applying a mechanical pressure to the alloy powder, wherein:
the orienting device includes:
a) an air-core coil; and
b) two ferromagnetic members made of a ferromagnetic material to be arranged within the air-core coil at respective open ends of the air-core coil with a space for containing the container in between.

In the sintered magnet production system according to the present invention, the two ferromagnetic members are arranged at the open ends of the air-core coil, with the container filled with the alloy powder by the filling device placed within the air-core coil. As a result, a magnetization parallel to the coil axis of the air-core coil is formed in the ferromagnetic members. By this magnetization, the magnetic field lines are adjusted to become aligned to the direction parallel to the coil axis, whereby a magnetic field closer to fully parallel to the coil axis is created. This reduces the variation in the direction of orientation of the particles depending on the position within the cavity. As a result, the difference in the shrinkage factor among the portions of the sintered magnet obtained through the sintering process will be smaller and the distortion will be minimized.

Each of the ferromagnetic members is composed of laminated plates made of a ferromagnetic material, with their plate faces intersecting with a plane perpendicular to the axis of the air-core coil. Typically, the plate faces should orthogonally intersect with the aforementioned plane, but may also obliquely intersect with it. As the plate-shaped members, for example, magnetic steel sheets can be used.

In the alternative, the ferromagnetic members are composed of magnetic particles of iron.

The reason why the plate faces of the plate-shaped members should preferably intersect with a plane perpendicular to the coil axis is as follows: When the strength of the magnetic field created by the air-core coil changes, particularly in the initial phase of the formation of the magnetic field or in the case of using a pulsed magnetic field, an eddy current perpendicular to the coil axis occurs in the ferromagnetic member. When such an eddy current occurs, the magnetic field in the ferromagnetic member is weakened, and consequently, the effect of aligning the magnetic field lines closer to the direction parallel to the coil axis will also be weakened. The previously described structure composed of laminated plates made of a ferromagnetic material with their plate faces intersecting with a plane perpendicular to the coil axis blocks the current at the interfaces of respective plates and prevents occurrence of the eddy current, so that a magnetic field closer to the direction parallel to the coil axis can be created.

The sintered magnet production method according to the present invention is a method including: a filling process in which a container is filled with alloy powder of a material for a sintered magnet; an orienting process in which the alloy powder held in the container is oriented by applying a magnetic field without applying a mechanical pressure to the alloy powder; and a sintering process in which the alloy powder oriented in the orienting process is sintered by heating the alloy powder without applying a mechanical pressure to the alloy powder, wherein:
the orienting process includes the steps of:
placing the container within an air-core coil and generating a magnetic field within the coil, with two ferromagnetic members to be arranged at respective open ends of the air-core coil with the container in between, to orient the alloy powder in the container.

The respective ferromagnetic member is composed of laminated plates made of a ferromagnetic material, with interfaces of respective plates in the laminated plates intersecting with a plane perpendicular to an axis of the air-core coil, or the respective ferromagnetic member is composed of magnetic particles of iron.

### ADVANTAGEOUS EFFECTS OF THE INVENTION

According to the present invention, it is possible to align the magnetic field lines within the coil closer to fully parallel to the coil axis and thereby minimize the distortion of a sintered magnet produced by a press-less method.

### BRIEF DESCRIPTION OF DRAWINGS

Fig. 1 is a schematic diagram showing the overall configuration of one embodiment of the sintered magnet production system according to the present invention.
Fig. 2A and 2B are a vertical sectional view and a top view, respectively, of an alloy-powder container used in the sintered magnet production system of the present embodiment.
Fig. 3 is a vertical sectional view showing the configuration of the orienting section in the sintered magnet production system of the present embodiment.
Fig. 4A-1 is a vertical sectional view showing the magnetic field lines of a magnetic field created within a coil in the orienting section with only the containers placed within the coil, Fig. 4A-2 is a sectional view at line A-A in Fig. 4A-1, and Fig. 4A-3 is a partially enlarged view of Fig. 4A-3, while Fig. 4B-1 is a vertical sectional view showing the magnetic field lines of a magnetic field created within the coil with the containers sandwiched between ferromagnetic members in the coil-axis direction, and Fig. 4B-2 is a sectional view at line B-B in Fig. 4B-1.
Fig. 5 is a top view showing a plate-shaped sintered magnet in a distorted form and the definition of the amount of distortion.
Fig. 6 is a graph showing the amount of distortion of sintered magnets obtained with a sintered magnet production system of the present embodiment and that of a comparative example.

### DESCRIPTION OF EMBODIMENTS

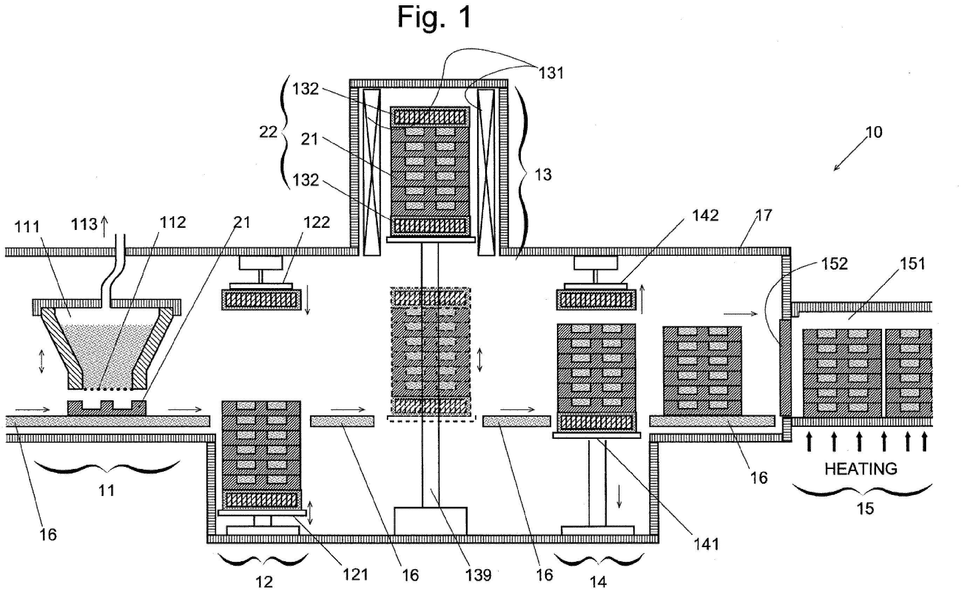

One embodiment of the sintered magnet production system and method according to the present invention is described using Figs. 1-6. The following descriptions deal with the case of producing a NdFeB system sintered magnet. The descriptions similarly apply in the case of producing a sintered magnet other than the NdFeB system, such as a SmCo system.

### EMBODIMENT

### (1) Configuration of Sintered Magnet Production System 10 of Present Embodiment

In this section, the overall configuration of the sintered magnet production system 10 of the present embodiment will be initially described, after which a detailed description of the configuration of the orienting section (orienting device) 13 will be given, and lastly, a description will be made about the configuration of a piling section 12, elevator 139 and ferromagnetic member removing section 14 which serve to assist the operation of the orienting section 13.

### (1-1) Overall Configuration

As shown in Fig. 1, the sintered magnet production system 10 of the present embodiment has a filling section 11, a piling section 12, an orienting section 13, a ferromagnetic member removing section 14 and a sintering section 15, as well as a conveyer (belt conveyer) 16 for sequentially conveying containers 21 among those sections in a roughly horizontal direction. No pressing machine is provided for the sintered magnet production system 10.

Furthermore, the sintered magnet production system 10 is provided with a closed chamber 17 containing the aforementioned sections exclusive of the sintering section 15. This closed chamber 17 can be filled with an inert gas, such as argon or nitrogen gas. The sintering section 15 is located outside the closed chamber 17, but as will be described later, it can be filled with an inert gas independently of the closed chamber 17. The inert gas used in the closed chamber 17 and the sintering section 15 serves to prevent oxidization of alloy powder which is the material for the NdFeB system sintered magnet.

The filling section 11 is a system for filling cavities 211 of the container 21 with alloy powder. It has a hopper 111 for storing an amount of alloy powder, a sieve member 112 provided at the opening at the lower end of the hopper 111, and a gas supplier 113 for repeatedly supplying compressed gas (inert gas) in a pulsed form to the hopper 111. Such a system for filling a container with powder using compressed gas repeatedly supplied in a pulsed form is called an "air-tapping system." For example, a system described in Patent Literature 2 can be used.

The configuration of the piling section 12, orienting section 13 and ferromagnetic member removing section 14 will be described later along with the description of the orienting device in the present invention.

The sintering section 15 has a sintering chamber 151 having a carry-in entrance and a carry-out exit for containing a number of containers 21, a heat-insulating door 152 provided at the carry-in entrance, and a heater (not shown) for heating the inside of the sintering chamber 151. The closed chamber 17 and the sintering chamber 151 communicate with each other at the carry-in entrance but can be thermally separated by closing the heat-insulating door 152. The sintering chamber 151 can be filled with inert gas (independently of the closed chamber 17).

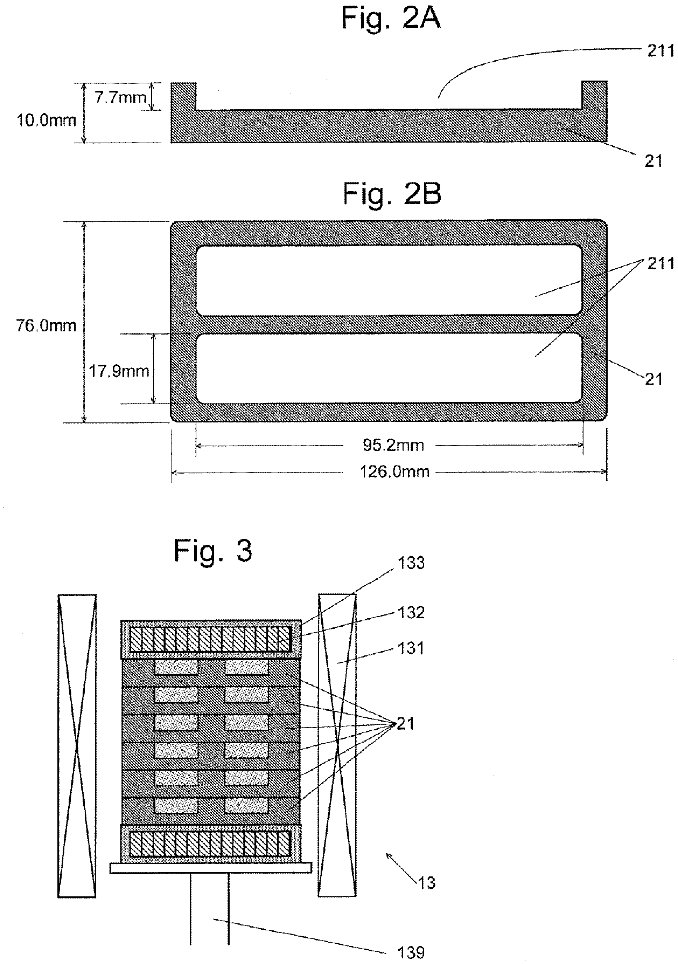

As shown in Figs. 2A and 2B, the container 21 used in the present embodiment has two cavities 211 each of which has a roughly rectangular-parallelepiped shape measuring 95.2 mm in length, 17.9 mm in width and 7.7 mm in depth and which are arranged side-by-side in their width direction. The entire container 21 measures 126 mm in length, 76 mm in width and 10 mm in thickness.

### (1-2) Configuration of Orienting Section (Orienting Device) 13

The configuration of the orienting section (orienting device) 13 in the sintered magnet production system 10 is hereinafter described. As shown in Fig. 3, the orienting section 13 consists of an air-core coil 131 and ferromagnetic members 132. The air-core coil 131 is positioned with its axis directed in a substantially vertical direction. The air-core coil 131 measures 150 mm in inner diameter and 200 mm in the distance between its open ends (coil length). The air-core coil 131 is located above the conveyer (belt conveyer) 16. By means of the elevator 139 (which will be described later), the target of the orienting process is carried into and removed from the air-core coil 131 through the opening on the lower side.

The ferromagnetic member 132 used in the present embodiment was composed of approximately 200 plate members made of magnetic steel (magnetic steel sheets) arranged next to each other with their easy axes of magnetization aligned in the direction of the coil axis (or with their plate faces intersecting with a plane perpendicular to the coil axis). In the present embodiment, non-oriented magnetic steel sheets were used, although oriented magnetic steel sheets may also be used. Each single magnetic steel sheet was 0.35 mm thick. The ferromagnetic member 132 was enclosed in a rectangular-parallelepiped containing case 133 made of a non-magnetic material. As another example of the ferromagnetic member132, a containing case 133 filled with magnetic particles of iron was also prepared.

In the orienting section 13, n containers 21 (where n is two or greater) piled in their thickness direction are placed within the air-core coil 131, with one ferromagnetic member 132 enclosed in the containing case 133 arranged above and below, i.e. on each of the two sides of the containers 21 facing the open ends of the air-core coil 131. That is to say, a structure including one ferromagnetic member 132, n containers 21 and another ferromagnetic member 132 sequentially piled from below is carried into the air-core coil 131 (this structure is hereinafter called the "pile 22").

### (1-3) Configuration of Piling Section 12, Elevator 139 and Ferromagnetic Member Removing Section 14

The piling section 12 is a system for building the pile 22. It has a first elevating stage 121 and a first top lift 122. The first elevating stage 121 can be vertically moved between a position which is level with the roughly horizontal conveyer line of the conveyer 16 and a position lower than the former position by an amount which is not less than the sum of the thickness of one containing case 133 and that of the (n-1) containers 21 in the pile 22.

The elevator 139 is located below the air-core coil 131. The pile 22 conveyed from the piling section 12 by the conveyer 16 is placed onto this elevator, which pushes up the pile 22 into the air-core coil 131. After the orienting process is completed, it lowers the pile 22 to the level of the conveyer line of the conveyer 16.

The ferromagnetic member removing section 14 is a system for removing the ferromagnetic members 132 from the pile 22 which has gone through the orienting process in the orienting section 13. It has a second elevating stage 141 and a second top lift 142. The second elevating stage 141 can be vertically moved between the level of the conveyer line of the conveyer 16 and a level lower than that by an amount equal to the thickness of one containing case 133.

### (2) Operation of Sintered Magnet Production System 10 of Present Embodiment

### (2-1) Filling Process

Initially, a container 21 is conveyed to a position below the hopper 111 of the filling section 11 by the conveyer 16, and the hopper 111 is attached to the upper side of the container 21. Next, compressed gas in a pulsed form is repeatedly supplied from the gas supplier 113 to the hopper 111 to make the alloy powder in the hopper 111 pass through the sieve member 112 and fill the cavity 211 of the container 21. Subsequently, the hopper 111 is removed from the container 21, and the container 21 is conveyed to the piling section 12 by the conveyer 16. These operations are cyclically performed for each container 21 until n containers 21 are completed.

### (2-2) Operation in Piling Section 12

In the piling section 12, initially, one ferromagnetic member 132 is placed onto the first elevating stage 121 by the first top lift 122. Next, the first elevating stage 121 is lowered so that the top face of the containing case 133 of the ferromagnetic member 132 will be level with the conveyer line of the conveyer 16. Then, one container 21 conveyed from the filling section 11 by the conveyer 16 is placed onto the top face of the containing case 133. Subsequently, the first elevating stage 121 is lowered so that the top face of this container 21 will be level with the conveyer line of the conveyer 16. This operation is repeatedly performed every time one container 21 is conveyed to the piling section 12 in the previously described manner until n containers are completed. After that, the second ferromagnetic member 132 is placed onto the top face of the uppermost container 21 by the first top lift 122. Thus, the pile 22 is completed. Subsequently, the first elevating stage 121 is moved upward so that the lowest portion of the pile 22 (the bottom face of the lower containing case 133) will be level with the conveyer line of the conveyer 16, and the pile 22 is conveyed to the elevator 139 by the conveyer 16.

### (2-3) Orienting Process

The pile 22 conveyed to the elevator 139 is pushed up by the elevator 139 into the air-core coil 132 of the orienting section 13. Then, a magnetic field is generated within the air-core coil 131, whereby the alloy powder in the containers 21 of the pile 22 is oriented along the axial direction of the air-core coil 131. The effect of the orienting section 13, and particularly, that of the ferromagnetic members 132 in this operation will be described later. Although the magnetic field to be eventually applied is a pulsed DC magnetic field of 4 tesla, it is preferable to previously apply a pulsed AC magnetic field, which facilitates the subsequent magnetic orientation by the pulsed DC magnetic field. After the application of the magnetic field is completed, the elevator 139 is lowered to remove the pile 22 from the air-core coil 131. Subsequently, the pile 22 is conveyed to the ferromagnetic member removing section 14 by the conveyer 16.

### (2-4) Operation in Ferromagnetic Member Removing Section 14

In the ferromagnetic member removing section 14, the pile 22 is placed onto the second elevating stage 141, and the upper ferromagnetic member 132 is removed from the pile 22 by the second top lift 142. Subsequently, the second elevating stage 141 is lowered by an amount equal to the thickness of the containing case 133 so that the bottom face of the lowermost container 21 in the n containers 21 will be level with the conveyer line of the conveyer 16. Then, only the n containers 21 in the pile are conveyed to the sintering section 15 by the conveyer 16, leaving the lower ferromagnetic member 132 behind. The upper and lower ferromagnetic members 132 left behind are returned to the piling section 12 by the conveyer 16.

### (2-5) Sintering Process

In the sintering process 15, the door 152 of the carry-in entrance is opened, and a predetermined number of piles of n containers 21 are carried into the sintering chamber 151. After that, the door 152 is closed, and the inside of the sintering chamber 151 is heated by the heater to a predetermined sintering temperature (normally, 900 to 1100°C). By this process, the alloy powder in the cavities 211 is sintered, and sintered magnets are obtained.

Any of the previously described processes is performed in an inert gas atmosphere formed within the closed chamber 17 or the sintering chamber 151. Furthermore, none of those processes include the step of press-molding the alloy powder.

### (3) Effect of Orienting Section 13 and Reason for Minimized Distortion of Sintered Magnet

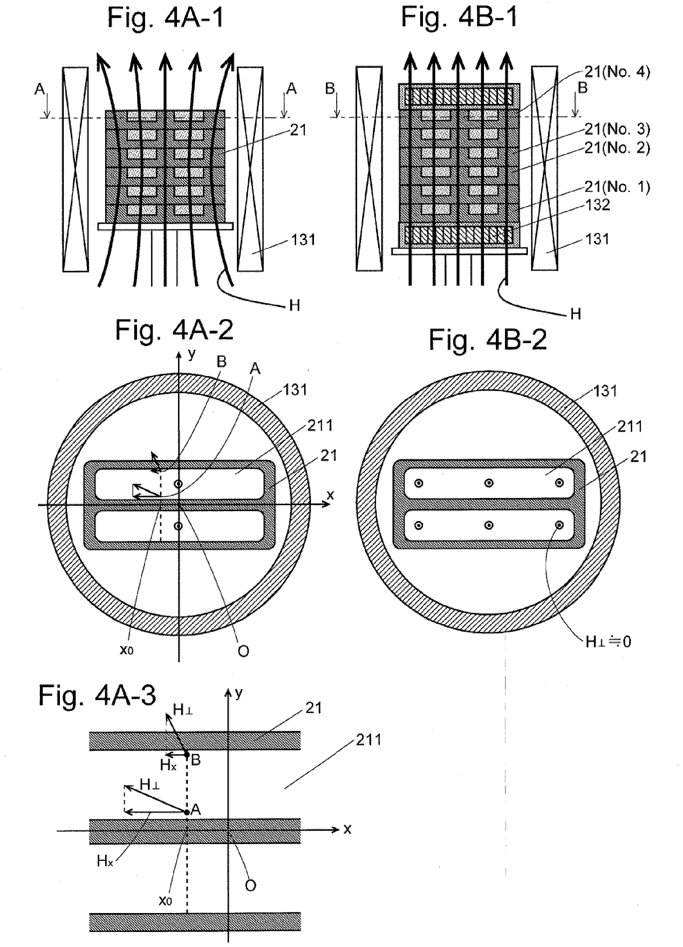

The effect of the orienting section 13 in the sintered magnet production system 10 of the present embodiment, and the reason why the distortion of the sintered magnet is minimized are described, using Figs. 4A-1 through 4B-2. Figs. 4A-1 through 4A-3 illustrate the direction of the magnetic field H within the air-core coil 131 in a conventional sintered magnet production system which does not use the ferromagnetic members 132. Among them, Fig. 4A-1 shows a vertical section (including the axis of the air-core coil 131), Fig. 4A-2 shows a horizontal section (perpendicular to the axis of the air-core coil 131) through the container 21 closest to the open ends of the air-core coil 131, and Fig. 4A-3 shows a partially enlarged view of Fig. 4A-2. Figs. 4B-1 and 4B-2 respectively show the direction of the magnetic field H on the vertical and horizontal aforementioned sections in the sintered magnet production system 10 of the present embodiment. In Figs. 4A-2 and 4A-3, a coordinate system is defined in which the x and y axes respectively extend along the long and short sides of the rectangular top face of the rectangular-parallelepiped cavity 211, with the origin O lying at the coil axis. The arrows show the direction and magnitude of the projection H_{⊥} of the magnetic field H onto the horizontal section (xy plane) as well as the magnitude of x component Hx.

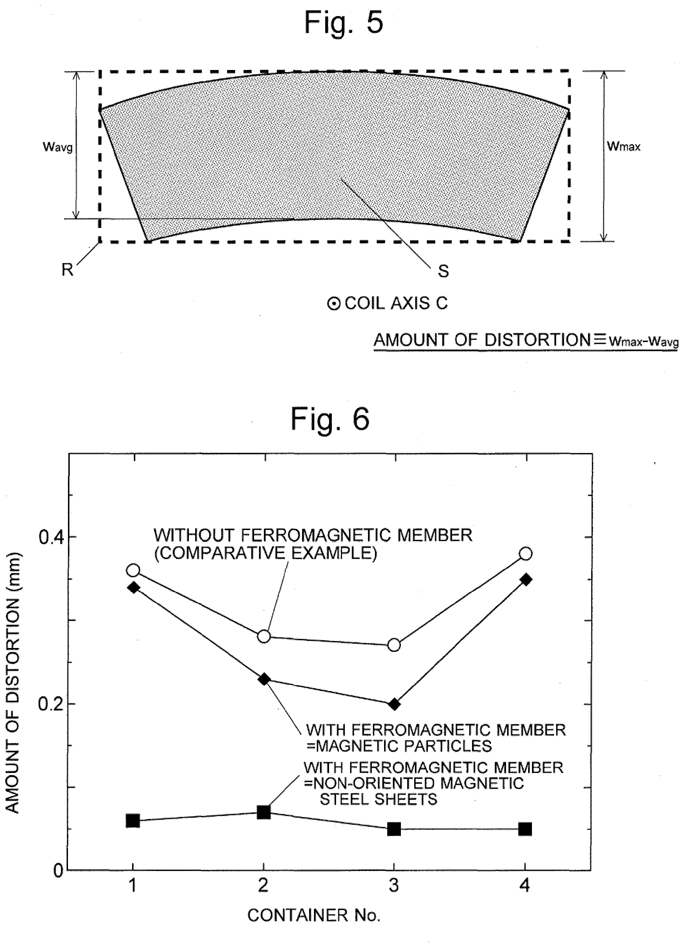

In the comparative example, i.e. in the sintered magnet production system which does not use the ferromagnetic members 132, a magnetic field which spreads in the radial direction as the distance from the center of the coil-axis direction increases toward the open ends is formed within the air-core coil 131 (Fig. 4A-1). Therefore, within the cavity 211 of the container 21, a magnetic field whose direction varies depending on the position is formed (Fig. 4A-3). Consequently, the alloy powder in the cavity 211 becomes magnetically oriented in different directions depending on the position, causing the sintered magnet being created to shrink in different directions at different points. Specifically, as shown in Fig. 4A-3, when two arbitrarily chosen points A and B at the same x coordinate (x₀) are compared, point A whose y coordinate is closer to zero has a greater magnitude of H_{⊥}, and furthermore, its direction is closer to the x direction, so that Hx at point A has a greater magnitude than at point B. Therefore, at any x coordinate, as the y coordinate becomes closer to zero or to the coil axis, Hx becomes stronger and more easily causes the shrinkage in the x direction during the sintering process. As a result, the sintered magnet as viewed on the aforementioned horizontal plane (xy plane) becomes distorted and bulges outward from the coil axis (see Fig. 5).

By contrast, in the sintered magnet production system 10 of the present embodiment, when a magnetic field is created within the air-core coil 131, the direction of the magnetic field is adjusted by the magnetization which is formed in the ferromagnetic members 132. As a result, the direction of the magnetic field becomes closer to the direction of the coil axis of the air-core coil 131 (Fig. 4B-1), so that the variation in the direction and strength of the magnetic field within the cavity 211 of the container 21 will be reduced (Fig. 4B-2).

Furthermore, as in the present embodiment, in the case where laminated plate-shaped ferromagnetic members (magnetic steel sheets) with their plate faces inclined from the plane perpendicular to the coil axis are used as the ferromagnetic member 132, when the pulsed DC magnetic field is created by the air-core coil 131, the ferromagnetic member can prevent an occurrence of eddy current which cancels the magnetic field. Therefore, the aforementioned effect of adjusting the direction of the magnetic field will not be weakened.

### (4) Result of Experiment

To confirm the influence and effect by the sintered magnet production system 10 of the present embodiment, the following experiment has been conducted. As the ferromagnetic member 132, the previously described one consisting of the non-oriented magnetic steel sheets and the one made of magnetic particles were used. Furthermore, as a comparative example, a similar experiment was conducted without using the ferromagnetic member 132, as shown in Fig. 4A-1. The number of containers 21 placed within the air-core coil 131 in the present experiment was four. In the following description, those four containers 21 are labeled as Nos. 1 to 4 from bottom to top. As shown in Fig. 5, the sintered magnets S produced in the present embodiment and the comparative example had a distorted form with the long side shaped like an arc. The amount of distortion was defined as wₘₐₓ-w_{avg}, where wₘₐₓ is the width of the short side of a rectangle R including the entire plate face of the sintered magnet S (see Fig. 5) and w_{avg} is the average width in the short-side direction of the sintered magnet S. The amount of distortion was determined for each of the containers Nos. 1-4 by measuring the sizes of the created sintered magnets S.

The result of the experiment demonstrated that, in any of the containers 21 Nos. 1-4, the amount of distortion was the largest in the comparative example, the second largest when the ferromagnetic member 132 made of magnetic particles was used, and the smallest when the ferromagnetic member 132 consisting of the non-oriented magnetic steel sheets was used. This result confirms that the sintered magnet production system 10 of the present embodiment can reduce the amount of distortion as compared to the comparative example.

As for the variation in the amount of distortion among the containers 21 or with respect to the position within the air-core coil 131, the following points should be mentioned: In the comparative example, the sintered magnets S produced in the containers 21 Nos. 1 and 4 placed near the open ends of the air-core coil 131 underwent a greater amount of distortion than those produced in the containers 21 Nos. 2 and 3 placed near the center of the air-core coil 131. The most likely reason is that the magnetic field in the comparative example is curved by a greater amount in the regions near the open ends of the air-core coil 131. When the ferromagnetic member 132 made of magnetic particles was used, there was no noticeable difference from the comparative example in terms of the variation depending on the position of the container. By contrast, when the ferromagnetic member 132 consisting of the non-oriented magnetic plate sheets was used, the variation in the amount of distortion depending on the position of the container was barely noticeable. This is most likely because the non-oriented magnetic plate sheets with the easy axes of magnetization orderly aligned in the direction of the coil axis improve the effect of correcting the distortion of the magnetic field, so that the magnetic field can be sufficiently aligned in the axial direction of the air-core coil 131 even in the region near the open ends.

### REFERENCE SIGNS LIST

- 11...: Filling Section
- 111...: Hopper
- 112...: Sieve Member
- 113...: Gas Supplier
- 12...: Piling Section
- 121...: First Elevating Stage
- 122...: First Top Lift
- 13...: Orienting Section
- 131...: Air-Core Coil
- 132...: Ferromagnetic Member
- 133...: Containing Case
- 139...: Elevator
- 14...: Ferromagnetic Member Removing Section
- 141...: Second Elevating Stage
- 142...: Second Top Lift
- 15...: Sintering Section
- 151...: Sintering Chamber
- 152...: Door of Carry-in Entrance
- 16...: Conveyer
- 17...: Closed Chamber
- 21...: Container
- 211...: Cavity
- 22...: Pile

## Claims

1. A sintered magnet production system including: a filling device (11) for filling a cavity (211) of a container (21) with alloy powder of a material for a sintered magnet; an orienting device (13) for orienting the alloy powder held in the cavity (211) by applying a magnetic field, the orienting device (13) not having a means for applying a mechanical pressure to the alloy powder; and a sintering device (15) for sintering the alloy powder oriented by the orienting device (13), by heating the alloy powder, the sintering device (15) not having a means for applying a mechanical pressure to the alloy powder, wherein:
the orienting device (13) includes:
a) an air-core coil (131); and
b) two ferromagnetic members (132) made of a ferromagnetic material to be arranged within the air-core coil (131) at respective open ends of the air-core coil (131) with a space for containing the container (21) in between, the respective ferromagnetic member (132) being composed of laminated plates made of a ferromagnetic material, or being composed of a case filled with magnetic particles of iron , with interfaces of respective plates in the laminated plates intersecting with an end surface of the air-core coil (131).

2. The sintered magnet production system according to claim 1, wherein the plate members are magnetic steel sheets.

3. A sintered magnet production method including: a filling process in which a container (21) is filled with alloy powder of a material for a sintered magnet; an orienting process in which the alloy powder held in the container (21) is oriented by applying a magnetic field without applying a mechanical pressure to the alloy powder; and a sintering process in which the alloy powder oriented in the orienting process is sintered by heating the alloy powder without applying a mechanical pressure to the alloy powder, wherein:
the orienting process includes steps of:
placing the container (21) within an air-core coil (131) and generating a magnetic field within the coil (131), with two ferromagnetic members (132) to be arranged at respective open ends of the air-core coil (131) with the container (21) in between, to orient the alloy powder in the container (21), the respective ferromagnetic member (132) being composed of laminated plates made of a ferromagnetic material, or being composed of a case filled with magnetic particles of iron, with interfaces of respective plates in the laminated plates intersecting with a plane perpendicular to an axis of the air-core coil.

4. The sintered magnet production method according to claim 3, wherein the plate members are magnetic steel sheets.

5. The sintered magnet production method according to claim 3 or 4, wherein a plurality of the containers (21) are piled in an axial direction of the air-core coil (131).

## Patentansprüche

1. System zur Herstellung eines Sintermagneten, umfassend: eine Fülleinrichtung (11) zum Befüllen einer Kavität (211) eines Behälters (21) mit einem Legierungspulver von einem Material für einen Sintermagneten; eine Orientierungseinrichtung (13) zum Orientieren des in der Kavität (211) gehaltenen Legierungspulvers durch Anlegen eines Magnetfelds, wobei die Orientierungseinrichtung (13) kein Mittel zum Anwenden eines mechanischen Drucks auf das Legierungspulver aufweist; und eine Sintereinrichtung (15) zum Sintern des mittels der Orientierungseinrichtung (13) orientierten Legierungspulvers durch Erhitzen des Legierungspulvers, wobei die Sintereinrichtung (15) kein Mittel zum Anwenden eines mechanischen Drucks auf das Legierungspulver aufweist, wobei
die Orientierungseinrichtung (13) umfasst:
a) eine Luftkernspule (131); und
b) zwei Ferromagnetglieder (132), welche aus einem ferromagnetischen Material hergestellt sind und innerhalb der Luftkernspule (131) an jeweiligen offenen Enden der Luftkernspule (131) mit einem Raum zum Aufnehmen des Behälters (21) hierzwischen anzuordnen sind, wobei das jeweilige Ferromagnetglied (132) von aus einem ferromagnetischen Material hergestellten laminierten Platten gebildet ist oder von einem mit magnetischen Eisenpartikeln gefüllten Kasten gebildet ist, wobei sich Grenzflächen jeweiliger Platten in den laminierten Platten mit einer Endoberfläche der Luftkernspule (131) schneiden.

2. System zur Herstellung eines Sintermagneten nach Anspruch 1, wobei die Plattenglieder magnetische Stahlbleche sind.

3. Verfahren zur Herstellung eines Sintermagneten, umfassend: einen Füllprozess, bei dem ein Behälter (21) mit Legierungspulver von einem Material für einen Sintermagneten gefüllt wird; einen Orientierungsprozess, bei dem das in dem Behälter (21) gehaltene Legierungspulver durch Anlegen eines Magnetfeldes ohne Anwendung eines mechanischen Drucks auf das Legierungspulver orientiert wird; und einen Sinterprozess, bei dem das in dem Orientierungsprozess orientierte Legierungspulver durch Erwärmen des Legierungspulvers ohne Anwendung eines mechanischen Drucks auf das Legierungspulver gesintert wird, wobei:
der Orientierungsprozess folgende Schritte umfasst:
Platzieren des Behälters (21) innerhalb einer Luftkernspule (131) und Erzeugen eines Magnetfeldes innerhalb der Spule (131) mit zwei Ferromagnetgliedern (132), welche an jeweiligen offenen Enden der Luftkernspule (131) mit hierzwischen angeordnetem Behälter (21) anzuordnen sind, um das Legierungspulver in dem Behälter (21) zu orientieren, wobei das jeweilige Ferromagnetglied (132) von aus einem ferromagnetischen Material hergestellten laminierten Platten gebildet ist oder von einem mit magnetischen Eisenpartikeln gefüllten Kasten gebildet ist, wobei sich Grenzflächen jeweiliger Platten in den laminierten Platten mit einer Ebene senkrecht zu einer Achse der Luftkernspule schneiden.

4. Verfahren zur Herstellung eines Sintermagneten nach Anspruch 3, wobei die Plattenglieder magnetische Stahlbleche sind.

5. Verfahren zur Herstellung eines Sintermagneten nach Anspruch 3 oder 4, wobei eine Mehrzahl der Behälter (21) in einer Axialrichtung der Luftkernspule (131) gestapelt sind.

## Revendications

1. Système de production d'aimant fritté incluant : un dispositif de remplissage (11) pour remplir une cavité (212) d'un récipient (21) avec de la poudre d'alliage d'un matériau pour un aimant fritté ; un dispositif d'orientation (13) pour orienter la poudre d'alliage maintenue dans la cavité (211) par application d'un champ magnétique, le dispositif d'orientation (13) ne présentant pas de moyen pour appliquer une pression mécanique à la poudre d'alliage ; et un dispositif de frittage (15) pour fritter la poudre d'alliage orientée par le dispositif d'orientation (13), par chauffage de la poudre d'alliage, le dispositif de frittage (15) ne présentant pas de moyen pour appliquer une pression mécanique à la poudre d'alliage, dans lequel :
le dispositif d'orientation (13) inclut :
a) une bobine à air (131) ; et
b) deux éléments ferromagnétiques (132) constitués d'un matériau ferromagnétique pour être disposés dans la bobine à air (131) à des extrémités ouvertes respectives de la bobine à air (131) avec un espace pour contenir le récipient (21) entre elles, l'élément ferromagnétique respectif (132) étant constitué de plaques stratifiées constituées d'un matériau ferromagnétique, ou étant constitué d'un boîtier rempli de particules magnétiques de fer, avec des interfaces de plaques respectives dans les plaques stratifiées croisant une surface d'extrémité de la bobine à air (131).

2. Système de production d'aimant fritté selon la revendication 1, dans lequel les éléments de plaques sont des tôles d'acier magnétique.

3. Procédé de production d'aimant fritté incluant : un procédé de remplissage dans lequel un récipient (21) est rempli avec une poudre d'alliage d'un matériau pour un aimant fritté ; un procédé d'orientation dans lequel la poudre d'alliage maintenue dans le récipient (21) est orientée par application d'un champ magnétique sans application d'une pression mécanique à la poudre d'alliage ; et un procédé de frittage dans lequel la poudre d'alliage orientée dans le procédé d'orientation est frittée par chauffage de la poudre d'alliage sans application d'une pression mécanique à la poudre d'alliage, dans lequel :
le procédé d'orientation inclut des étapes de :
placement du récipient (21) dans une bobine à air (131) et production d'un champ magnétique dans la bobine (131), avec deux éléments ferromagnétiques (132) à disposer aux extrémités respectives ouvertes de la bobine à air (131) avec le récipient (21) entre elles, pour orienter la poudre d'alliage dans le récipient (21), l'élément ferromagnétique respectif (132) étant constitué de plaques stratifiées constituées d'un matériau ferromagnétique, ou étant constitué d'un boîtier rempli de particules magnétiques de fer, avec des interfaces de plaques respectives dans les plaques stratifiées croisant un plan perpendiculaire à un axe de la bobine à air.

4. Procédé de production d'aimant fritté selon la revendication 3, dans lequel les éléments de plaques sont des tôles d'acier magnétiques.

5. Procédé de production d'aimant fritté selon la revendication 3 ou 4, dans lequel les plusieurs récipients (21) sont empilés dans une direction axiale de la bobine à air (131).
